(19) Europäisches Patentamt
European Patent Office
Office européen des brevets

(11) Veröffentlichungsnummer: **0 124 866**
**B1**

(12) # EUROPÄISCHE PATENTSCHRIFT

(45) Veröffentlichungstag der Patentschrift: **12.08.87**

(51) Int. Cl.⁴: **C 09 B 67/42,** D 06 L 3/12, D 06 P 1/647, D 06 P 3/60

(21) Anmeldenummer: **84104921.6**

(22) Anmeldetag: **02.05.84**

(54) **Kaltwasserdispergierbare Farbstoffgranulate.**

(30) Priorität: **04.05.83 CH 2426/83**

(43) Veröffentlichungstag der Anmeldung: **14.11.84 Patentblatt 84/46**

(45) Bekanntmachung des Hinweises auf die Patenterteilung: **12.08.87 Patentblatt 87/33**

(84) Benannte Vertragsstaaten: **CH DE FR GB IT LI**

(56) Entgegenhaltungen:
**EP-A-0 057 158**
**FR-A-795 683**
**FR-A-1 092 203**
**FR-A-2 388 029**
**US-A-2 081 017**

(73) Patentinhaber: **CIBA- GEIGY AG, Klybeckstrasse 141, CH- 4002 Basel (CH)**

(72) Erfinder: **Balliello, Paolo, Dr., Burstelstrasse 12, D-7888 Rheinfelden 8 (DE)**

(74) Vertreter: **Zumstein, Fritz jun., Dr., Dr. F. Zumstein sen. Dr. E. Assmann Dr. R. Koenigsberger Dipl.- Ing. F. Klingseisen Dr. F. Zumstein jun. Bräuhausstrasse 4, D-8000 München 2 (DE)**

**EP 0 124 866 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft kaltwasserdispergierbare Farbstoffgranulate, ein Verfahren zu deren Herstellung und deren Verwendung zum Färben von Textilmaterialien.

EP-A-0 057 158 betrifft Farbstoffpulver bzw. Farbstoffgranulate, die neben einem wasserlöslichen Farbstoff ebenfalls eine Kombinaton aus einem anionischen Dispergiermittel und einem Amphotensid enthalten. Diese Präparate weisen eine gute Löslichkeit in kaltem Wasser auf.

FR-A-2 388 029 betrifft wässrige Präparationen von wasserunlöslichen Farbstoffen, die als erfindungswesentliches Merkmal ein Polycarboxylat enthalten, die aber auch Betain Monohydrat enthalten können.

Es wurde gefunden, dass sich die Kaltwasserdispergierbarkeit von Granulaten wasserunlöslicher Farbstoffe durch den Zusatz von Amphotensiden überraschenderweise drastisch steigern lässt. Gegenstand der vorliegenden Erfindung sind somit kaltwasserdispergierbare Farbstoffgranulate enthaltend mindestens einen wasserunlöslichen Farbstoff, ein anionisches Dispergiermittel und gegebenenfalls weitere Zusätze, welche dadurch gekennzeichnet sind, dass sie mindestens ein Amphotensid enthalten. Dabei soll das Kriterium der Kaltwasserdispergierbarkeit im folgenden als erfüllt angesehen werden, wenn sich 5 g Farbstoffgranulat unter normierter mechanischer Einwirkung in 50 ml Wasser, temperiert auf 25 bis 30°C, innerhalb von 5 Minuten rückstandsfrei dispergieren lassen (MKDL-Test).

Als wasserunlösliche Farbstoffe kommen solche in Betracht, die bei einer Temperatur von 20°C eine Wasserlöslichkeit von weniger als 5 g/l Wasser aufweisen. Es handelt sich koloristisch gesehen, vor allem um Dispersions, farbstoffe, Küpenfarbstoffe, Schwefelfarbstoffe und um Pigmentfarbstoffe, die chemisch den verschiedensten Klassen angehören. Bei den Dispersionsfarbstoffen handelt es sich beispielsweise um von Carbon- und/oder Sulfonsäuregruppen freie Nitro-, Aminoketon-, Ketonimin-, Methin-, Polymethin-, Diphenylamin-, Chinolin-, Benzimidazol-, Xanthen-, Oxazin-, Aminonaphthochinon- oder Cumarinfarbstoffe und insbesondere um Anthrachinon- und Azofarbstoffe, wie Mono- oder Disazofarbstoffe. Bei den Küpenfarbstoffen handelt es sich ebenfalls um solche, die weder Sulfo- noch Carboxylgruppen im Molekül enthalten. Die genannten Farbstoffe sind bekannt. Die Granulate können aber auch Mischungen von wasserunlöslichen Farbstoffen enthalten. Die Mengen der Farbstoffe in den Granulaten schwanken von 20 bis 80 Gewichtsprozent, bezogen auf das Gesamtpräparat.

Es ist möglich, gewünschtenfalls auch wasserlösliche Farbstoffe den erfindungegemässen Farbstoffgranulaten zuzugeben, z. B. Reaktivfarbstoffe, sofern Mischgewebe z. B. aus Polyester/Baumwolle gefärbt werden sollen.

Ferner sollen unter dem Begriff Farbstoff im vorliegenden auch wasserunlösliche optische Aufheller verstanden werden. In Frage kommen beispielsweise Aufheller, die frei von wasserlöslichmachenden Gruppen sind und den folgenden Klassen angehören: 2,5-Bis-benzoxazolylthiophene, 1,2-Bis-benzoxazolyläthylene, Naphthalimide, 2-Stilbenylbenzoxazole, 4,4'-Bis-vinylstilbene, 1,4-Bis-styrylbenzole, Cumarine, Triazinylpyrene sowie 1,4-Bis-benzoxazolylnaphthaline.

Besonders bewährt sich der Zusatz von Amphotensiden bei der Sprühtrocknung von Küpenfarbstoffen.

Bei den anionischen Dispergiermitteln handelt es sich um die üblichen Dispergiermittel für wasserunlösliche Farbstoffe, z. B. um Kondensationsprodukte von aromatischen Sulfonsäuren mit Formaldehyd. Besonders geeignet sind jedoch Ligninsulfonate, z. B. die unter der Bezeichnung Sulfitablauge erhältlichen Verbindungen. Es können auch Gemische dieser Dispergiermittel verwendet werden. Allgemein enthalten die erfindungsgemässen Granulate 10 bis 70 Gew.% an anionischem Dispergiermittel.

Daneben können die Granulate noch weitere in Handelsformulierungen übliche Zusätze, wie Coupagemittel, z. B. Dextrin, Harnstoff, Rohrzucker oder anorganische Salze, wie Natriumchlorid oder Natriumsulfat, sowie oberflächenaktive Substanzen, wie äthoxylierte oder sulfonierte bzw. sulfatierte organische Verbindungen, d.h. nichtionische oder anionische Tenside, wie z. B. Nonylphenolpentadecaglykoläther, Nonylphenoldiglykoläthersulfat oder Dodecylbenzolsulfonat enthalten.

Unter Amphotensiden sind solche Verbindungen zuverstehen,die in wässriger Lösung, je nach pH-Wert, anionischen oder kationischen Charakter aufweisen und in der Nähe des isoelektrischen Punktes innere Salze bilden. Nach Moore werden die amphotenside in Ampholyte und Betaine eingeteilt [siehe J. Soc. Cosmetic Chemists 11, 13 (1960)].

Es hat sich gezeigt, dass zur Verbesserung der Kaltwasserdispergierbarkeit von wasserunlöslichen Farbstoffen insbesondere die Amphotenside vom Betaintyp geeignet sind, vor allem solche der Formel 1

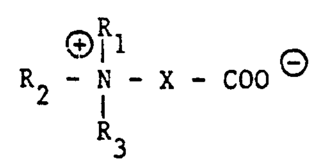

(I) ,

worin die Reste $R_1$ bis $R_3$ und das Brückenglied X die folgende Bedeutung haben:

$R_1$ und $R_3$ unabhängig voneinander einen $C_1$-$C_4$-Alkylrest,

$R_2$ einen gegebenenfalls durch Hydroxy, Acetylamino, Niederalkoxy (z. B. Methoxy oder Äthoxy) oder

Halogen substituierten $C_1$-$C_{20}$-Alkylrest,

X ein gegebenenfalls durch Alkyl $C_5$-$C_{20}$ substituierter Alkylenrest mit 1 bis 3 Kohlenstoffatomen.

Ein besonders wirksames Amphotensid ist das Betain selbst ($R_1$, $R_2$ und $R_3$ = Methyl, X = Methylen), das als Anhydrid, Hydrochlorid oder auch Monohydrat, gegebenenfalls als Kalium- oder Natriumsalz, eingesetzt wird.

Neben Betainen der Formel I kommen jedoch beispielsweise auch solche in Frage, die anstelle der Carboxylgruppe eine Sulfo- (Sulfobetaine) oder Sulfatogruppe (Sulfatbetaine) aufweisen.

Die Granulate können auch ein Gemisch von zwei oder mehreren Amphotensiden enthalten.

Vorzugsweise enthalten die erfindungsgemässen Granulate 0,5 bis 15, insbesondere 8 bis 13 Gew.% Amphotensid.

Hergestellt werden die Farbstoffgranulate, indem man einen oder mehrere wasserunlösliche Farbstoffe unter Zusatz eines anionischen Dispergiermittels, mindestens eines Amphotensids und gegebenenfalls weiterer Zusätze in Wasser anschlämmt bzw. suspendiert und die so erhaltene Suspension sprühtrocknet. Zur Sprühtrocknung oder auch Sprühgranulierung wird die hilfsmittelhaltige Farbstoffsuspension über eine zur Erzeugung von Tropfen gewünschter Grösse geeignete Vorrichtung (z. B. Düse, Zertropfer, Schwinger oder rotierende Scheibe) in den Trockner eingegeben. Die Gaseingangstemperatur des Trockners liegt bei 130° bis 200°C, die Gasausgangstemperatur bei 100° bis 150°C. Die Trocknung wird so gestaltet, dass die Produkttemperatur nicht über einen spezifischen kritischen Grenzwert steigt, oberhalb dessen das Farbstoffgranulat irreversible Veränderungen erleidet.

Vor dem Sprühtrocknen kann die Farbstoffsuspension einem Mahlprozess unterworfen werden, beispielsweise in einer Rührwerks-Kugelmühle oder Sandmühle. Falls vermahlen wird, kann man einen Teil der Komponenten auch erst nach dem Mahlvorgang zusetzen.

Der zu granulierende Farbstoff kann z. B. als trockene Ware oder als Presskuchen oder auch aus dem letzten Syntheseschritt direkt als Suspension z. B. nach beendeter Kupplung, eingesetzt werden.

Die erfindungsgemässen Farbstoffgranulate zeichnen sich durch folgende Eigenschaften aus:
- hervorragende Kaltwasserdispergierbarkeit - Dispergierzeit < 5 Minuten;
- gute Benetzbarkeit;
- homogene graduelle Wasseraufnahme, daher praktisch keine Tendenz zur Klumpenbildung;
- schaumfrei in der Anwendung;
- homogene Korngrössenverteilung;
- rieselfähig;
- staubfrei.

Verwendung finden die erfindungsgemässen Farbstoffgranulate zur Herstellung von Färbebädern, Klotzflotten oder Druckpasten. Diese eignen sich zum Färben oder Bedrucken vor allem von Textilmaterial, z. B. solchem aus natürlichen Cellulosefasern.

Die folgenden Beispiele dienen zur Erläuterung der Erfindung. Teile bedeuten Gewichtsteile und Prozente Gewichtsprozente.

**Beispiel 1:**

1000 Teile Sulfitablauge-Pulver werden mit 4082 Teilen Farbstoff der Formel

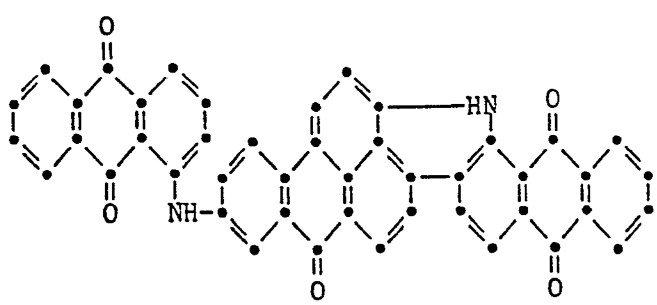

als 23%iger Presskuchen vermischt. Dazu gibt man noch 604 Teile Sulfitablauge-Pulver und 348 Teile Betain-Anhydrid.

Dieses Gemisch wird anschliessend in 1335 Teilen Wasser suspendiert. Die so erhaltene Suspension mit einem Trockengehalt von ca. 40 % unterwirft man einer Nassmahlung, bis eine Primärteilchengrösse des Farbstoffs von $\leqslant$ 1 µm erreicht ist. Die Farbstoffdispersion wird sodann filtriert, um noch vorhandene grobe Teilchen abzutrennen, durch Zugabe von Wasser auf einen Feststoffgehalt von ca. 25 % eingestellt - die Viskosität der Dispersion beträgt 30 $cP_{25°C}$ - und schliesslich sprühgetrocknet. Als Sprühorgan wird eine Einstoffdüse verwendet; die Lufteingangstemperatur beträgt 132°C und die Luftausgangstemperatur 110°C. Die Sprühtrocknung wird so gesteuert, dass die Restfeuchte der Granulate bei ca. 7 % liegt.

Das so hergestellte Granulat weist die folgende Zusammensetzung auf:
31 5 % Farbstoff der angegebenen Formel,
11,0 % Betain,
50,5 % Sulfitablauge-Pulver,
7,0 % Restfeuchte.

Das Granulat hat eine Kaltwasserdispergierbarkeit von 100 g/l (d.h. im MKDL-Test 5 g/50 ml) in einer Dispergierzeit von 2 bis 3 Minuten. Um die gleiche Menge eines entsprechenden Granulats, das ohne Betainzusatz hergestellt wurde in 1 l Wasser zu dispergieren benötigt man eine Dispergierzeit von 18 bis 20 Minuten. Die Anschlämmung ist zu Beginn zäh und viskos und der Farbstoff lässt sich nur langsam in eine homogene Verteilung bringen.

**Beispiele 2 bis 5:**

Verfährt man wie im Beispiel 1 beschrieben und sprühgranuliert die in Spalte 2 der folgenden Tabelle angegeben Küpenfarbstoffe zusammen mit Dispergiermittel unl Amphotensid (jeweils eingesetzte Mengen, siehe Spalte 3), so erhält man Farbstofformulierungen, der in Spalte 4 angegebenen Zusammensetzung, die ebenfalls eine gute Kaltwasserdispergierbarkeit aufweisen.

| Beispiel | Farbstoff | Komponenten | eingesetzte Mengen [Teile] | Zusammensetzung des Granulats [Gew. %] |
|---|---|---|---|---|
| 2 | C.I. Vat Black, C.I. 69005 | Farbstoff | 1.000 | 37,2 |
| | | Naphthalinsulfonsäure-Formaldehydkondensat | 1.424 | 53,0 |
| | | Betainanhydrid | 130 | 4,8 |
| | | | | Restfeuchte 5 |
| 3 | 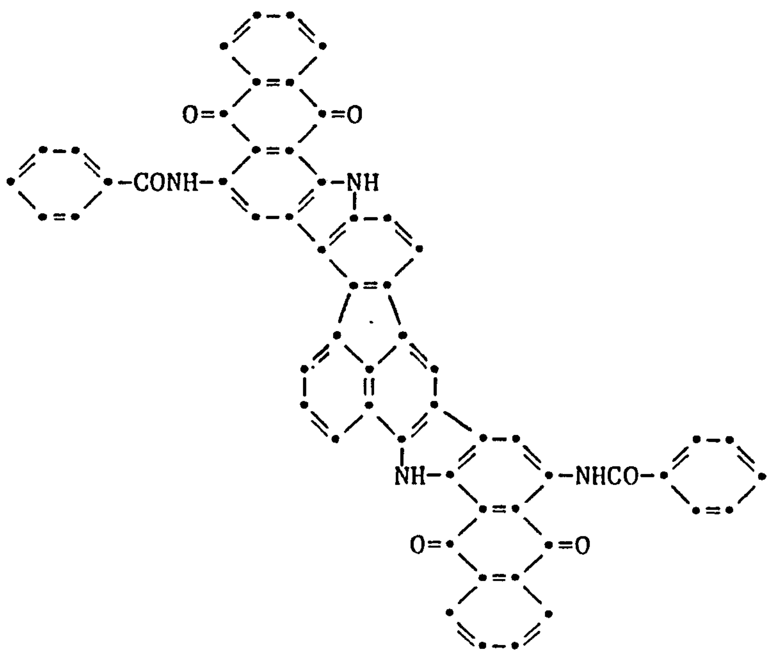 | Farbstoff | 1.000 | 30 |
| | | Naphthalinsulfonsäure-Formaldehydkondensat | 2.000 | 60 |
| | | Betainanhydrid | 166 | 5 |
| | | | | Restfeuchte 5 |

| Bei-spiel | Farbstoff | Komponenten | eingesetzte Mengen [Teile] | Zusammensetzung des Granulats [Gew. % ] |
|---|---|---|---|---|
| 4 | C.I. Vat Blue 19, C.I. 59805 | Farbstoff<br>Naphthalinsulfonsäure-Formaldehydkondensat<br>Betainanhydrid | 1.000<br>1.690<br>142 | 33,5<br>56,7<br>4,8<br>Restfeuchte 5 |
| 5 | 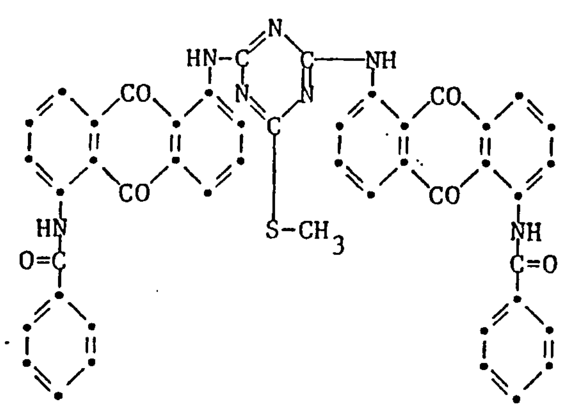 | Farbstoff<br>Naphthalinsulfonsäure-Formaldehydkondensat<br>Betainanhydrid | 1.000<br>976<br>71,1 | 46,4<br>45,3<br>3,3<br>Restfeuchte 5 |

**Beispiel 6:**

2.000 Teile des optischen Aufhellers der Formel

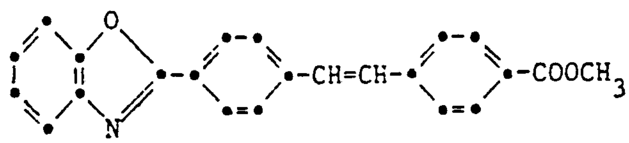

werden mit 1.000 Teilen Naphthalinsulfonsäure-Formaldehydkondensat und 133,3 Teilen Betainanhydrid vermischt. Das Gemisch wird anschliessend in 600 Teilen Wasser suspendiert und einer Nassmahlung unterworfen, bis die Primärteilchengrösse der Aufhellerpartikel < 5 µm ist. Durch Filtration trennt man noch eine geringe Mengen grober Teilchen ab; sodann erfolgt die Sprühtrocknung der hilfsmittelhaltigen Aufhellersuspension und zwar wie im Beispiel 1 beschrieben.

Man erhält ein gut kaltwasserdispergierbares Präparat der folgenden Zusammensetzung:

60 % optischer Aufheller
30 % Naphthalinsulfonsäure-Formaldehydkondensat
4 % Betainanhydrid
6 % Restfeuchte.

Werden nach dem vorstehend beschriebenen Verfahren die folgenden optischen Aufheller granuliert, so erhält man ebenfalls gut benetzbare und rückstandsfrei dispergierbare Granulate.

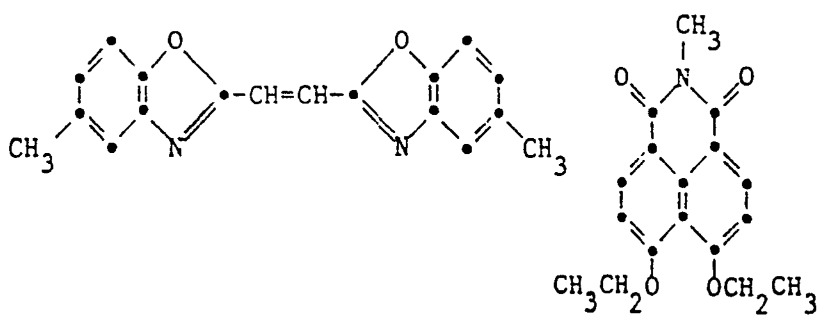

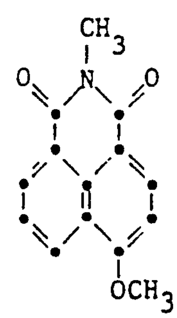

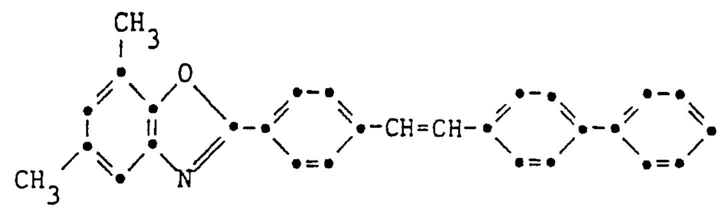

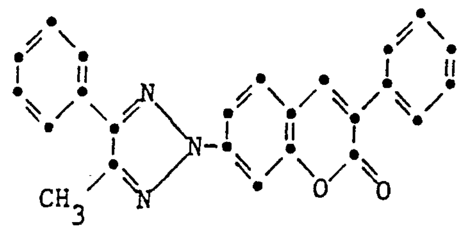

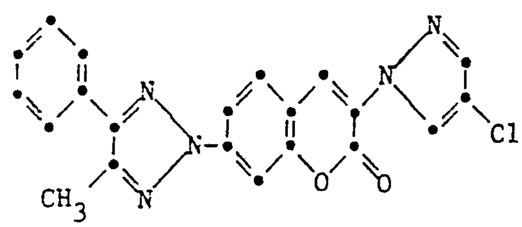

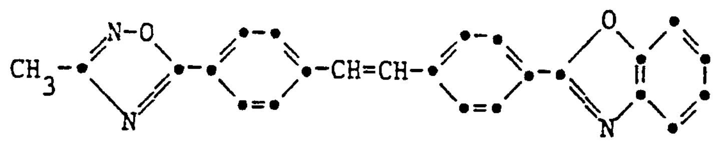

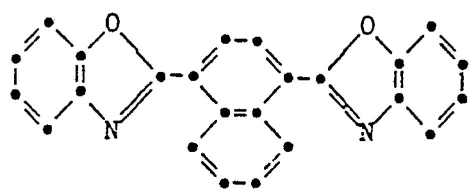

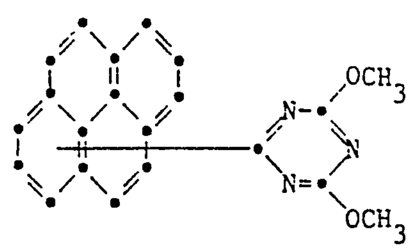

**Mechanischer Test zur Beurteilung des Kalt-Dispergier- bzw. Lösevermögens (MKDL-Test)**

5 g Farbstoffgranulat werden auf einer perforierten Stahlscheibe aufgebracht, die mittels Hubmechanismus waagrecht in einem mit 50 ml demin. Wasser gefüllten 100 ml Becherglas gehalten wird. Die Stahlscheibe ist mit 68 Löchern à 3 mm Durchmesser versehen und vom Durchmesser her so dimensioniert, dass sie knapp an die Wandung des Becherglases heranreicht. Das Wasser hat eine Temperatur von 25° bis 30° C. Man wartet 30 Sekunden bis sich das Farbstoffgranulat auf der eingetauchten Stahlscheibe abgesetzt hat und setzt dann den Hubmechanismus in Bewegung (30 Hub/min, Hubhöhe 35 mm, oberer Totpunkt liegt über der Wasseroberfläche). Man beobachtet die Stahlscheibe und bestimmt die Zeitdauer, bis zu der kein Farbstoffrest mehr auf der Stahlscheibe zu erkennen ist.

Von den an Farbstoffgranulate gestellten Praxisanforderungen her gesehen, wird die Dispergierzeit wie folgt bewertet:

bis 5 Minuten, gut
5 bis 10 Minuten, mässig
> 10 Minuten, schlecht.

**Patentansprüche**

1. Kaltwasserdispergierbare Farbstoffgranulate enthaltend mindestens einen wasserunlöslichen Farbstoff, ein anionisches Dispergiermittel und gegebenenfalls weitere Zusätze, dadurch gekennzeichnet, dass diese Granulate mindestens ein Amphotensid enthalten.

2. Frabstoffgranulate gemäss Anspruch 1, dadurch gekennzeichnet, dass diese als Amphotensid eine Verbindung vom Betaintyp enthalten.

3. Farbstoffgranulate gemäss Anspruch 2, dadurch gekennzeichnet, dass diese als Amphotensid ein Betain der Formel I

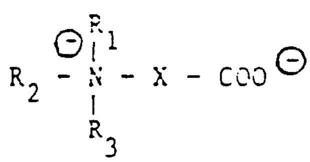

(I)

enthalten, worin

$R_1$ und $R_3$ unabhängig voneinander einen $C_1$-$C_4$-Alkylrest und

$R_2$ einen gegebenenfalls durch Hydroxy, Acetylamino, Methoxy, Äthoxy oder Halogen substituierten $C_1$-$C_{20}$-Alkylrest bedeutet und

X ein gegebenenfalls durch Alkyl $C_5$-$C_{20}$ substituierter Alkylenrest mit 1 bis 3 Kohlenstoffatomen ist.

4. Farbstoffgranulate gemäss Anspruch 3, dadurch gekennzeichnet, dass diese als Betain der Formel (I) ein solches enthalten, worin $R_1$, $R_2$ und $R_3$ Methyl und X Methylen ist.

5. Farbstoffgranulate gemäss Anspruch 1, dadurch gekennzeichnet, dass diese 0,5 bis 15 Gew-% an Amphotensid enthalten.

6. Verfahren zur Herstellung der Farbstoffgranulate gemäss Anspruch 1, dadurch gekennzeichnet, dass man einen wasserunlöslichen Farbstoff zusammen mit einem anionischen Dispergiermittel und einem Amphotensid in Wasser anschlämmt oder suspendiert und die Suspension mittels Sprühtrocknung in ein Granulat überführt.

7. Verfahren gemäss Anspruch 6, dadurch gekennzeichnet, dass man die Farbstoffsuspension vor der Sprühtrocknung einem Mahlprozess unterwirft.

8. Verwendung der Farbstoffgranulate gemäss Anspruch 1 zur Herstellung von Färbebädern, Klotzflotten oder Druckpasten zum Färben und Bedrucken von Textilmaterial.

9. Verwendung gemäss Anspruch 8 zum Färben und Bedrucken von Cellulosematerialien.

**Claims**

1. A cold water dispersible dyestuff granulate which comprises at least one water-insoluble dye, an anionic dispersant and optionally further auxiliaries, which granulate contains at least one amphoteric surfactant.

2. A dyestuff granulate according to claim 1, which contains a compound of the betain type as amphoteric surfactant.

3. A dyestuff granulate according to claim 2 wherein the amphoteric surfactant is a betain of the formula I,

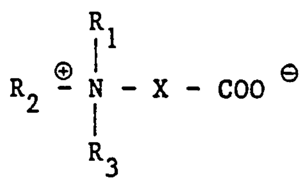 (I)

wherein each of

$R_1$ and $R_3$ independently of the other is a $C_1$-$C_4$ alkyl radical, $R_2$ is a $C_1$-$C_{20}$alkyl radical which is unsubstituted or substituted by hydroxy acetylamino, methoxy, ethoxy or halogen, and X is a $C_1$-$C_3$-alkylene radical which is unsubstituted or substituted by $C_5$-$C_{20}$-alkyl.

4. A dyestuff granulate according to claim 3, which contains a betain of the formula I, wherein $R_1$, $R_2$ and $R_3$ are methyl and X is methylene.

5. A dyestuff granulate according to claim 1, which contains 0.5 to 15 % by weight of amphoteric surfactant.

6. A process for the preparation of a dyestuff granulate according to claim 1, which comprises suspending a water-insoluble dye together with an anionic dispersant and an amphoteric surfactant in water, and converting the suspension so obtained into a granulate by spray drying.

7. A process according to claim 6, wherein the dyestuff suspension is subjected to a grinding procedure before being spray dried.

8. Use of a dyestuff granulate according to claim 1 for the preparation of dyebaths, padding liquors or printing pastes for dyeing and printing textile material.

9. Use according to claim 8 for dyeing and printing cellulosic material.

**Revendications**

1. Granulés tinctoriaux dispersables dans l'eau froide, contenant au moins un colorant insoluble dans l'eau, un dispersant anionique et éventuellement d'autres additifs, caractérisés par le fait que ces granulés contiennent au moins un agent tensio-actif amphotère.

2. Granulés tinctoriaux selon la revendication 1, caractérisés par le fait qu'ils contiennent en tant qu'agent tensio-actif amphotère un composé de type bétaïne.

3. Granulés tinctoriaux selon la revendication 2, caractérisés par le fait qu'ils contiennent en tant qu'agent tensio-actif amphotère une bétaïne de formule I

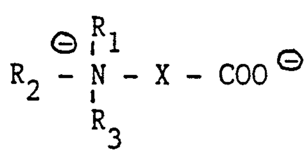 (I)

dans laquelle

$R_1$ et $R_3$ représentent, indépendamment l'un de l'autre, un reste alkyle en $C_1$-$C_4$ et

$R_2$ représente un reste alkyle en $C_1$-$C_{20}$ éventuellement substitué par un atome d'halogène ou un groupe hydroxyle, acétylamino, méthoxy ou éthoxy, et

X est un reste alkylène ayant de 1 à 3 atomes de carbone, éventuellement substitué par un groupe alkyle en $C_5$-$C_{20}$.

4. Granulés tinctoriaux selon la revendication 3, caractérisés par le fait qu'ils contiennent,en tant que bétaïne de formule (I), une bétaïne dans laquelle $R_1$, $R_2$ et $R_3$ sont des groupes méthyle et X est le groupe méthylène.

5. Granulés tinctoriaux selon la revendication 1, caractérisés par le fait qu'ils contiennent de 0,5 à 15 % en poids d'agent tensio-actif amphotère.

6. Procédé pour la préparation des granulés tinctoriaux selon la revendication 1, caractérisé par le fait que l'on délaie ou met en suspension, dans de l'eau, un colorant insoluble dens l'eau, conjointement avec un dispersant anionique et un agent tensio-actif amphotère, et on transforme la suspension en un produit granulé, par séchage par pulvérisation.

7. Procédé selon la revendication 6, caractérisé par le fait qu'avant le séchage par pulvérisation, on soumét la suspension de colorant à un processus de broyage.

8. Utilisation des granulés tinctoriaux selon la revendication 1 pour la préparation de bains de teinture, bains de foulardage ou pâtes à imprimer, pour la teinture et l'impression de matériau textile.

9. Utilisation selon la revendication 8 pour la teinture et l'impression de matériaux cellulosiques.